# EUROPEAN PATENT APPLICATION

(11) **EP 4 693 783 A1**
(43) Date of publication of application: **11.02.2026**
(21) Application number: 23930655.8
(22) Date of filing: 31.03.2023
(51) Int. Cl.: H02H 7/26, H02H 3/16

(54) **POWER-SYSTEM PROTECTION SYSTEM, POWER-SYSTEM PROTECTION DEVICE, AND POWER-SYSTEM PROTECTION METHOD**

(71) Applicant: Mitsubishi Electric Corporation, Chiyoda-ku Tokyo 100-8310 (JP)
(72) Inventor: SATO, Motohiro, Tokyo 100-8310 (JP); EDO, Takahiro, Tokyo 100-8310 (JP)
(74) Representative: Meissner Bolte Partnerschaft mbB
(86) International application number: PCT/JP2023/013601
(87) International publication number: WO 2024/202021

(57) **Abstract**

A power system protection system (90) includes a system circuit breaker (40) installed on a power transmission line (20) connecting a power generator (10) and a load (60) supplied with power from the power generator (10) to interrupt a current flowing through the power transmission line (20) upon occurrence of an anomaly on the power transmission line (20); and a commutator (51) that is connected to a ground (80) and isolates the power transmission line (20) from the ground (80) when in an "off" state and causes the power transmission line (20) to conduct to the ground (80) when in an "on" state. Upon detection of an accident caused by a ground fault or short circuit occurred on the power transmission line (20), the power system protection system (90) turns on the commutator (51) to redirect the current flowing through the power transmission line (20) to the ground before the system circuit breaker (40) interrupts the current flowing through the power transmission line (20).

## Description

### Field

The present disclosure relates to an electrical power (hereinafter, simply power) system protection system, a power system protector, and a power system protection method each for protecting a power system upon occurrence of an accident such as a ground fault or short circuit on a power transmission line.

### Background

A power transmission system that transmits power generated by a power generator to a load conventionally includes, on a power transmission line, a circuit breaker and a relay such as those disclosed in Patent Literature 1 in case of occurrence of an accident such as a short circuit or ground fault. When a ground fault occurs on a power transmission line resulting from a lightning strike or the like, the relay detects the accident and sends a circuit-breaking command to the circuit breaker, and the circuit breaker that has received the circuit-breaking command from the relay then opens the circuit to interrupt current flowing through the power transmission line. The circuit breaker is closed after arc is extinguished by interruption of the current flowing through the power transmission line, thereby causing the power transmission system to be restored to a condition of normal power transmission.

### Citation List

### Patent Literature

Patent Literature 1: Japanese Patent Application Laid-open No. 2004-281302

### Summary of Invention

### Problem to be solved by the Invention

It is known that electrical isolation performance of space at the ground fault location on the power transmission line is restored within a time period, at a maximum, of two cycles of the period of the alternating current after arc extinction. This means that when a ground fault has occurred on a power transmission line of an alternating current of 60 Hz, electrical isolation performance of space at the ground fault location will be restored in 30 milliseconds (ms) after arc extinction.

The power transmission line will be in a power outage condition with no voltage during opening of the circuit breaker, during which the impedance of the power system rises, and stability of the power system decreases. A prompt restart of power transmission after arc extinction is therefore demanded. A circuit breaker opens and closes a circuit by physically moving a movable contactor, which imposes a limitation on action speed improvement. Thus, a time period ranging from about 300 ms to about 1 second is required from when the arc is extinguished by opening the circuit to interrupt the current flowing through the power transmission line using the circuit breaker until the power transmission system is restored to a condition of normal power transmission by closing the circuit. As described above, operation of arc extinction by interrupting the current using a circuit breaker installed on the power transmission line is limited by the action speed of the circuit breaker, thereby making it difficult to reduce the time to restart power transmission.

The present disclosure has been made in view of the foregoing, and it is an object of the present disclosure to provide a power system protection system capable of restoring a power transmission system to a condition of normal power transmission in a short time after arc extinction.

### Means to Solve the Problem

To solve the above problems and achieve the object, a power system protection system according to the present disclosure includes: a system circuit breaker installed on a power transmission line, the power transmission line connecting a power generator and a load, the load being to be supplied with power from the power generator, the system circuit breaker being to interrupt a current flowing through the power transmission line upon occurrence of an anomaly on the power transmission line; and a commutator connected to a section between the system circuit breaker and the load, of the power transmission line, and connected to a ground, the commutator being to isolate the power transmission line from the ground when in an "off" state, and to cause the power transmission line to conduct to the ground when in an "on" state. Upon detection of an accident of a ground fault or short circuit occurred on the power transmission line, the power system protection system turns on the commutator to redirect the current flowing through the power transmission line to the ground before the system circuit breaker interrupts the current flowing through the power transmission line.

### Effects of the Invention

The present disclosure provides an advantageous effect that a power system protection system can be provided that can restore a power transmission system to a condition of normal power transmission in a short time after arc extinction.

### Brief Description of Drawings

FIG. 1 is a diagram illustrating a configuration of a power transmission system according to a first embodiment.
FIG. 2 is a functional block diagram of a relay of the power system protector according to the first embodiment.
FIG. 3 is a flowchart illustrating a workflow of the power system protector according to the first embodiment.
FIG. 4 is a diagram illustrating a state in which a ground fault has occurred in the power transmission system according to the first embodiment.
FIG. 5 is a diagram illustrating a state in which a mechanical switch has been turned on in a commutator of the power system protector according to the first embodiment.
FIG. 6 is a diagram illustrating a state in which a semiconductor switch has been turned on in the commutator of the power system protector according to the first embodiment.
FIG. 7 is a diagram illustrating a state in which the semiconductor switch has been turned off in the commutator of the power system protector according to the first embodiment.
FIG. 8 is a diagram illustrating a configuration of the power transmission system according to a second embodiment.
FIG. 9 is a diagram illustrating a configuration of the power transmission system according to a third embodiment.
FIG. 10 is a diagram illustrating a configuration of the power transmission system according to a fourth embodiment.
FIG. 11 is a diagram illustrating a hardware configuration of a controller of each of relays of the power system protectors according to the first and second embodiments and of a controller of a control device according to the third and fourth embodiments.

### Description of Embodiments

A power system protection system, a power system protector, and a power system protection method according to embodiments will be described in detail below with reference to the drawings.

### First Embodiment.

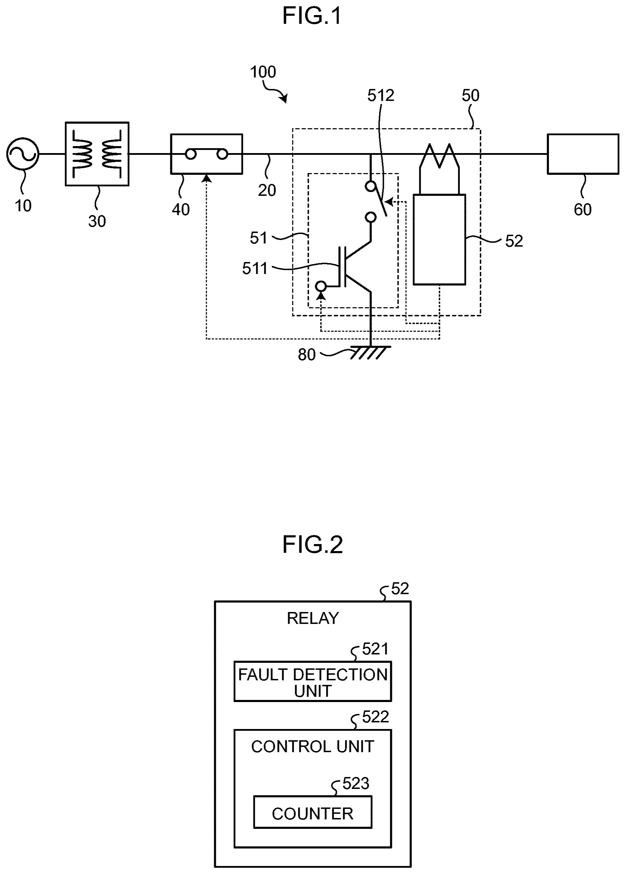

FIG. 1 is a diagram illustrating a configuration of a power transmission system according to a first embodiment. A power transmission system 100 is a power system that transmits power generated by a power generator 10 to a load 60. A transformer 30, a system circuit breaker 40, and a power system protector 50 are installed on a power transmission line 20. The power system protector 50 includes a commutator 51 and a relay 52. The commutator 51 is connected to a section between the system circuit breaker 40 and the load 60, of the power transmission line 20, and is connected to a ground 80. The commutator 51 isolates the power transmission line 20 from the ground 80 when in an "off" state, and causes the power transmission line 20 to conduct to the ground 80 when in an "on" state. The commutator 51 includes a semiconductor switch 511 and a mechanical switch 512 connected in series with the semiconductor switch 511. The power system protector 50 is installed in such a manner that the power transmission line 20 and the ground 80 are connected to each other via the commutator 51. The commutator 51 is installed in such a manner that the mechanical switch 512 is disposed nearer to the power transmission line 20 and the semiconductor switch 511 is disposed nearer to the ground 80.

The semiconductor switch 511 is configured to include multiple switching elements connected in parallel or in series with each other. Use of a greater number of parallel-connected switching elements enables a higher current to be conducted through the semiconductor switch 511. Meanwhile, use of a greater number of serialconnected switching elements enables the semiconductor switch 511 to have a higher withstand voltage.

FIG. 2 is a functional block diagram of the relay of the power system protector according to the first embodiment. The relay 52 includes a fault detection unit 521 and a controller 522. The fault detection unit 521 detects occurrence, on the power transmission line 20, of an anomaly due to an accident such as a short circuit or ground fault, based on a voltage value of a current flowing through the power transmission line 20. The controller 522 controls the commutator 51 and the system circuit breaker 40. When a ground fault occurs on the power transmission line 20 due to a cause such as a lightning strike, the fault detection unit 521 detects occurrence of the accident and notifies the controller 522 of the occurrence of the accident. The controller 522 includes a counter 523. The following description assumes that a count value N of the counter 523 has an initial value of 1.

In normal state when no accident is occurring on the power transmission line 20, the semiconductor switch 511 and the mechanical switch 512 are both turned off.

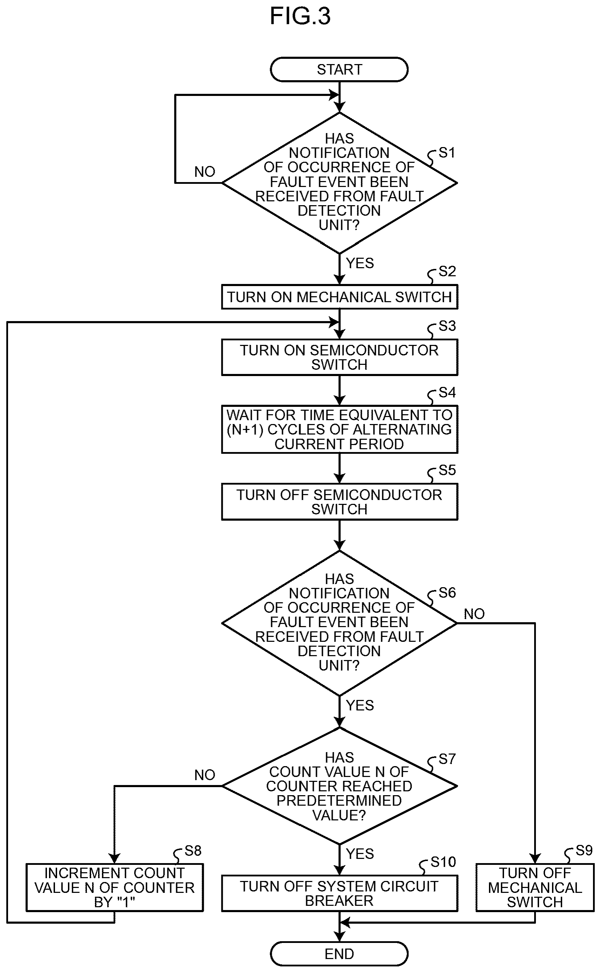

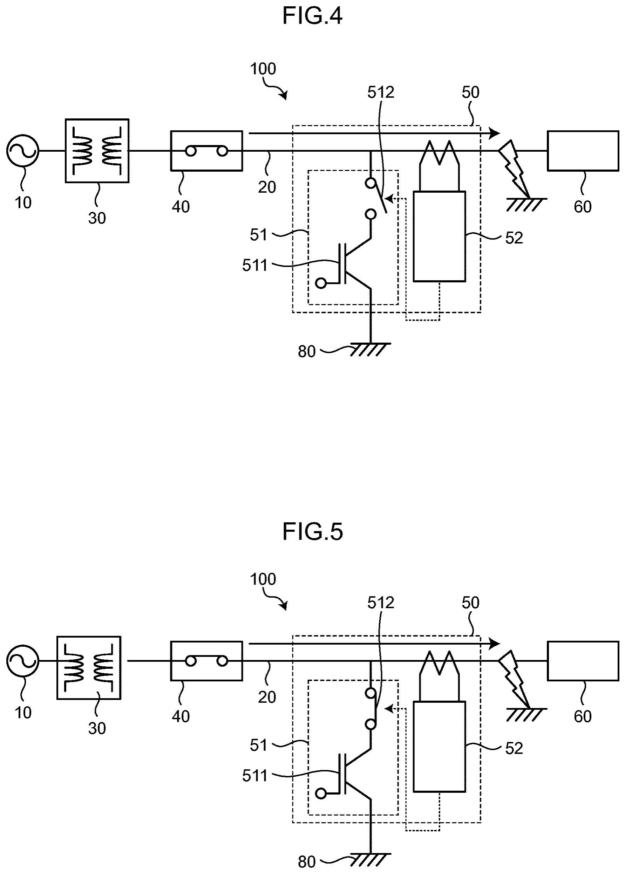

FIG. 3 is a flowchart illustrating a workflow of the power system protector according to the first embodiment. At step S1, the controller 522 determines whether the controller 522 has received a notification of occurrence of an accident from the fault detection unit 521. FIG. 4 is a diagram illustrating a state in which a ground fault has occurred in the power transmission system according to the first embodiment. In FIG. 4, the solid arrow indicates the path of the current transmitted from the power generator 10. An occurrence of a ground fault on the power transmission line 20 causes an anomalous value in terms of the voltage value of the current flowing through the power transmission line 20. This causes the fault detection unit 521 to detect the occurrence of the accident, and the controller 522 to receive a notification of occurrence of an accident from the fault detection unit 521. When the controller 522 has received a notification of occurrence of an accident from the fault detection unit 521, the answer at step S1 is Yes, and the controller 522 causes the process to proceed to step S2. When the controller 522 has not received a notification of occurrence of an accident from the fault detection unit 521, the answer at step S1 is No, and the controller 522 repeats the operation of step S1.

At step S2, the controller 522 sends a contactclosing command to the mechanical switch 512 to turn on the mechanical switch 512. FIG. 5 is a diagram illustrating a state in which the mechanical switch has been turned on in the commutator of the power system protector according to the first embodiment. In FIG. 5, the solid arrow indicates the path of the current transmitted from the power generator 10. The semiconductor switch 511 is still in an "off" state when the mechanical switch 512 is turned on. Accordingly, the current flowing through the power transmission line 20 is not redirected to the commutator 51, but continues to flow through the power transmission line 20.

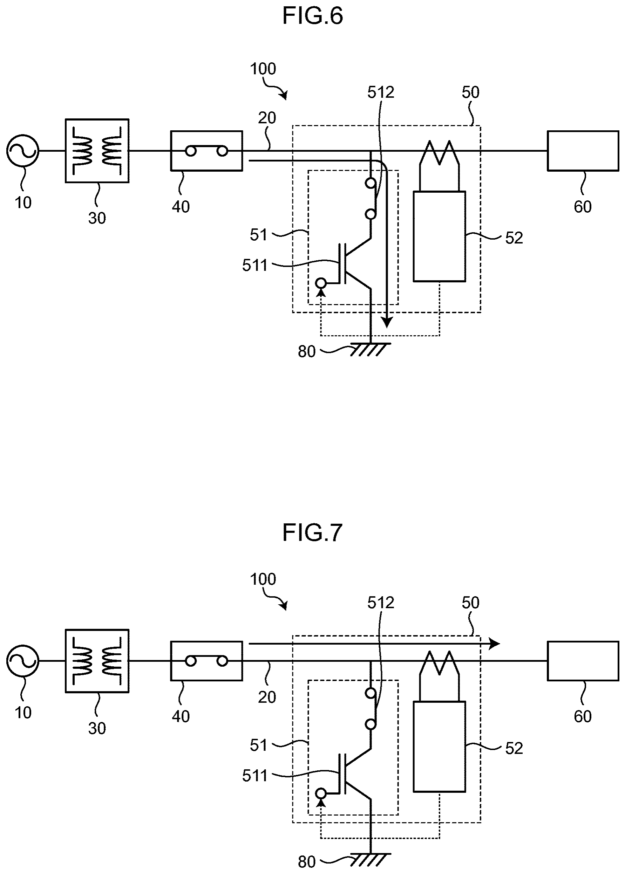

At step S3, the controller 522 sends a command to the semiconductor switch 511 to turn on the semiconductor switch 511. FIG. 6 is a diagram illustrating a state in which the semiconductor switch has been turned on in the commutator of the power system protector according to the first embodiment. In FIG. 6, the solid arrow indicates the path of the current transmitted from the power generator 10. Turning on of both the mechanical switch 512 and the semiconductor switch 511 causes the commutator 51 to be in an "on" state. This causes the current to flow from the power transmission line 20 through the commutator 51 to the ground 80, and the current to no longer flow through the fault location. The arc is thus extinguished.

At step S4, the controller 522 waits for a time equivalent to (N+1) cycles of the period of the alternating current flowing through the power transmission line 20, where N is the count value of the counter 523.

At step S5, the controller 522 sends a command to the semiconductor switch 511 to turn off the semiconductor switch 511. FIG. 7 is a diagram illustrating a state in which the semiconductor switch has been turned off in the commutator of the power system protector according to the first embodiment. In FIG. 7, the solid arrow indicates the path of the current transmitted from the power generator 10. Turning off of the semiconductor switch 511 causes the commutator 51 to be in an "off" state. This causes the current to no longer flow to the commutator 51, but to flow through the power transmission line 20.

At step S6, the controller 522 determines whether the controller 522 has received a notification of occurrence of an accident from the fault detection unit 521. When the controller 522 has received a notification of occurrence of an accident from the fault detection unit 521, the answer at step S6 is Yes, and the controller 522 causes the process to proceed to step S7. When the controller 522 has not received a notification of occurrence of an accident from the fault detection unit 521, the answer at step S6 is No, and the controller 522 causes the process to proceed to step S9.

In a case of a ground fault, keeping no current flowing through the power transmission line 20 for a time equivalent to two cycles of the period of the alternating current flowing through the power transmission line 20 results in extinction of the arc that was generated in space at the fault location as described above, in which case the answer at step S6 is expected to be No.

At step S7, the controller 522 determines whether the value of the count value N of the counter 523 has reached a predetermined value. When the count value N of the counter 523 has not reached the predetermined value, the answer at step S7 is No, and the controller 522 causes the process to proceed to step S8. When the count value N of the counter 523 has reached the predetermined value, the answer at step S7 is Yes, and the controller 522 causes the process to proceed to step S10.

At step S8, the controller 522 increments the count value N of the counter 523 by "1". After step S8, the controller 522 causes the process to proceed to step S3.

At step S9, the controller 522 sends a circuit-breaking command to the mechanical switch 512 to turn off the mechanical switch 512. Since power transmission to the power transmission line 20 has been recovered since the semiconductor switch 511 was turned off at step S5, the mechanical switch 512 can be turned off at any time. After step S9, the controller 522 terminates the process.

At step S10, the controller 522 sends a circuit-breaking command to the system circuit breaker 40 to turn off the system circuit breaker 40 to thereby interrupt the current. After step S10, the controller 522 terminates the process.

In the foregoing operation, when the controller 522 has received a notification of occurrence of an accident at step S6, and the count value N of the counter 523 has not reached the predetermined value, the controller 522 increments the count value N of the counter 523 by "1" at step S8, thereafter turns on the semiconductor switch 511 at step S3, waits for a time equivalent to (N+1) cycles of the period of the alternating current at step S4, and turns off the semiconductor switch 511 at step S5. That is, when the answer at step S6 is Yes, the controller 522 repeatedly makes the determination of whether the controller 522 has received a notification of occurrence of an accident while extending the time period in which the semiconductor switch 511 is being turned off. This enables the arc to be extinguished in a second or later time period in which the semiconductor switch 511 is being turned off even when the arc was not extinguished for some reason in the first time period in which the semiconductor switch 511 was being turned on.

Note that in a case of a short circuit fault, the cause of the short circuit will not be removed even when extension is provided of the time period in which the semiconductor switch 511 is being turned on. Accordingly, a flow of a current through the power transmission line 20 will repeatedly cause an accident to occur. In this case, when the count value N of the counter 523 reaches a predetermined value at step S7, the system circuit breaker 40 is turned off to prevent the current from flowing to the power transmission line 20. This allows work to be performed for removing the cause of the short circuit at the fault location.

As described above, the power system protector 50 according to the first embodiment causes the current to be redirected to the commutator 51 to prevent the current from flowing to the fault location, and turning off of the semiconductor switch 511 of the commutator 51 causes the current to be no longer redirected to the commutator 51, and power supply to the power transmission line 20 is thus restarted. Thus, the power transmission system 100, which uses the power system protector 50 according to the first embodiment, can reduce the time required for restoration to the condition of normal power transmission after arc extinction as compared to a power transmission system that interrupts a current on the power transmission line using a circuit breaker.

JEC-2300, which is an alternating-current (AC) circuit breaker standard provided by the Institute of Electrical Engineers of Japan, and IEEE 37.09-2018 provided by the Institute of Electrical and Electronics Engineers (IEEE) require that a circuit-closing operation and a circuit-opening operation be performed with an operation interval of 0.3 seconds as a standard value in terms of novoltage time period, as a standard operation duty of a circuit breaker for high-speed reclosure. Performing a circuit-closing operation and a circuit-opening operation with an interval of less than 0.3 seconds is difficult when a current flowing through a power transmission line is to be interrupted by a circuit breaker. In contrast, the power system protector 50 according to the first embodiment opens and closes the power transmission line 20 by turning on and off of the semiconductor switch 511, and is accordingly capable of performing an opening operation and a closing operation with a time interval of less than 0.3 seconds. The power system protector 50 according to the first embodiment can thus comply with the standards of JEC-2300 and IEEE 37.09-2018.

### Second Embodiment.

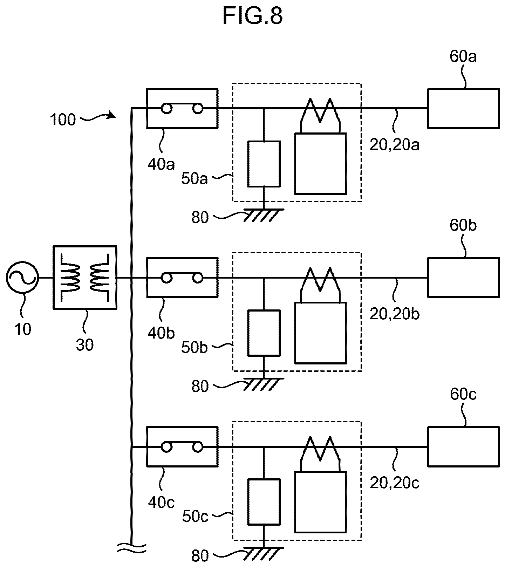

FIG. 8 is a diagram illustrating a configuration of the power transmission system according to a second embodiment. The power transmission system 100 according to the second embodiment differs from the power transmission system 100 according to the first embodiment in that, in the downstream of the transformer 30, the power transmission line 20 is branched into a branch line 20a connecting to a load 60a, a branch line 20b connecting to a load 60b, and a branch line 20c connecting to a load 60c; and system circuit breakers 40a, 40b, and 40c and power system protectors 50a, 50b, and 50c are installed on the respective branch lines 20a, 20b, and 20c. The power system protectors 50a, 50b, and 50c are each similar to the power system protector 50 included in the power transmission system 100 according to the first embodiment.

Upon occurrence of an accident on one of the branch lines 20a, 20b, and 20c, the power transmission system 100 according to the second embodiment is capable of continuously transmitting power through one or more of the branch lines 20a, 20b, and 20c on which no accident has occurred. This can increase stability of the power system.

### Third Embodiment.

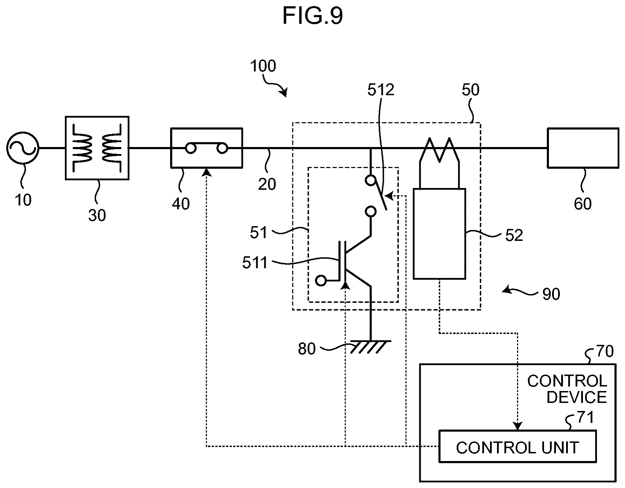

FIG. 9 is a diagram illustrating a configuration of the power transmission system according to a third embodiment. The power transmission system 100 according to the third embodiment includes a control device 70, which controls the commutator 51 and the system circuit breaker 40. The commutator 51 and the system circuit breaker 40, and the control device 70 may be connected to each other via a network or via a dedicated line. The relay 52 includes the fault detection unit 521 similarly to the relay 52 of the power transmission system 100 according to the first embodiment illustrated in FIG. 2, but does not include the controller 522. Instead, the control device 70 includes a controller 71. The fault detection unit 521 notifies the controller 71 of the control device 70 of occurrence of an accident. The system circuit breaker 40, the power system protector 50, and the control device 70 together form a power system protection system 90, which protects the power transmission system 100, which is a power system.

The power system protection system 90 according to the third embodiment operates similarly to the power system protector 50 according to the first embodiment except that the commutator 51 and the system circuit breaker 40 are controlled by the controller 71 of the control device 70.

Similarly to the power system protector 50 according to the first embodiment, the power system protection system 90 according to the third embodiment causes the current to be redirected to the commutator 51 to prevent the current from flowing to the fault location, and turning off of the semiconductor switch 511 of the commutator 51 causes the current to be no longer redirected to the commutator 51, and power supply to the power transmission line 20 is thus restarted. Thus, the power transmission system 100, which uses the power system protection system 90 according to the third embodiment, can reduce the time required for restoration to the condition of normal power transmission after arc extinction as compared to a power transmission system that interrupts a current on the power transmission line using a circuit breaker.

### Fourth Embodiment.

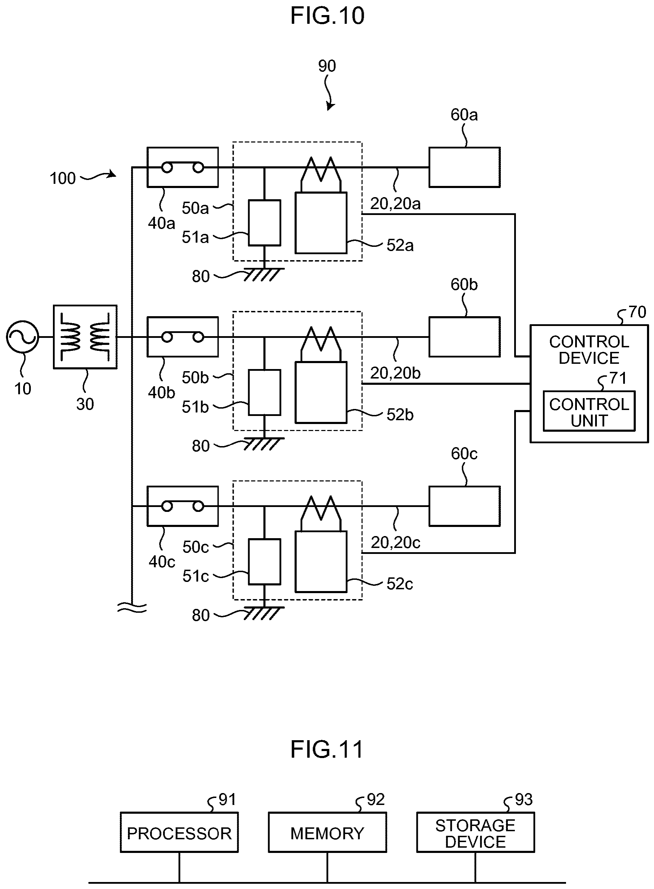

FIG. 10 is a diagram illustrating a configuration of the power transmission system according to a fourth embodiment. The power transmission system 100 according to the fourth embodiment is configured such that, in the downstream of the transformer 30, the power transmission line 20 is branched into the branch line 20a connecting to the load 60a, the branch line 20b connecting to the load 60b, and the branch line 20c connecting to the load 60c; the system circuit breakers 40a, 40b, and 40c and the power system protectors 50a, 50b, and 50c are installed on the respective branch lines 20a, 20b, and 20c; and the system circuit breakers 40a, 40b, and 40c, the power system protectors 50a, 50b, and 50c, and the control device 70 together form a power system protection system. The control device 70 is connected to relays 52a, 52b, and 52c of the respective power system protectors 50a, 50b, and 50c on the respective branch lines 20a, 20b, and 20c. When the control device 70 receives a notification of occurrence of an accident from one of the relays 52a, 52b, and 52c, the control device 70 controls a corresponding one of the commutators 51a, 51b, and 51c included in a corresponding one of the power system protectors 50a, 50b, and 50c that includes the one of the relays 52a, 52b, and 52c that has notified the control device 70 of the occurrence of an accident. The other part is similar to the power transmission system 100 according to the third embodiment.

Upon occurrence of an accident on one of the branch lines 20a, 20b, and 20c, the power transmission system 100 according to the fourth embodiment is capable of continuously transmitting power through one or more of the branch lines 20a, 20b, and 20c on which no accident has occurred. This can increase stability of the power system.

Note that although the foregoing description has been provided with respect to a configuration in which the single control device 70 centrally controls the system circuit breakers 40a, 40b, and 40c and the commutators 51a, 51b, and 51c, the power transmission system 100 may be configured such that a pair of the system circuit breaker 40a and the commutator 51a, a pair of the system circuit breaker 40b and the commutator 51b, and a pair of the system circuit breaker 40c and the commutator 51c are controlled by different control devices 70.

A hardware configuration of the controller 522 of each of 52a, 52b, and 52c of the power system protectors 50, 50a, 50b, and 50c according to the first and second embodiments, and of the controller 71 of the control device 70 according to the third and fourth embodiments will next be described.

FIG. 11 is a diagram illustrating a hardware configuration of the controller of each of the relays of the power system protectors according to the first and second embodiments, and of the controller of the control device according to the third and fourth embodiments. The controllers 522 and 71 are each implemented by a processor 91, which performs various processing tasks, a memory 92, which is a main memory, and a storage device 93, which stores information.

The processor 91 may be computing means such as a computing unit, a microprocessor, a microcomputer, a central processing unit (CPU), or a digital signal processor (DSP). In addition, the memory 92 can be a nonvolatile or volatile semiconductor memory such as a random access memory (RAM), a read-only memory (ROM), a flash memory, an erasable programmable read-only memory (EPROM), or an electrically erasable programmable read-only memory (EEPROM) (registered trademark). The storage device 93 stores a program for performing processing to control the system circuit breakers 40, 40a, 40b, and 40c and the power system protectors 50, 50a, 50b, and 50c. The processor 91 reads out a program stored in the storage device 93 to the memory 92 and executes the program. The functionality of the controllers 522 and 71 is provided in such a manner that the processor 91 reads out a program stored in the storage device 93 to the memory 92, and executes the program.

The configurations described in the foregoing embodiments are merely examples of aspects. These configurations can be combined with another known technology, and can be partly omitted and/or modified without departing from the gist.

### Reference Signs List

10 power generator; 20 power transmission line; 20a, 20b, 20c branch line; 30 transformer; 40, 40a, 40b, 40c system circuit breaker; 50, 50a, 50b, 50c power system protector; 51, 51a, 51b, 51c commutator; 52, 52a, 52b, 52c relay; 60, 60a, 60b, 60c load; 70 control device; 71, 522 controller; 80 ground; 90 power system protection system; 91 processor; 92 memory; 93 storage device; 100 power transmission system; 511 semiconductor switch; 512 mechanical switch; 521 fault detection unit; 523 counter.

## Claims

1. A power system protection system comprising:
a system circuit breaker installed on a power transmission line, the power transmission line connecting a power generator and a load, the load being to be supplied with power from the power generator, the system circuit breaker being to interrupt a current flowing through the power transmission line upon occurrence of an anomaly on the power transmission line; and
a commutator connected to a section between the system circuit breaker and the load, of the power transmission line, and connected to a ground, the commutator being to isolate the power transmission line from the ground when in an "off" state, and to cause the power transmission line to conduct to the ground when in an "on" state, wherein
upon detection of an accident of a ground fault or short circuit occurred on the power transmission line, the power system protection system is adapted to turn on the commutator to redirect the current flowing through the power transmission line to the ground before the system circuit breaker interrupts the current flowing through the power transmission line.

2. The power system protection system according to claim 1 comprising:
a controller adapted to control on-off switching of the commutator and of the system circuit breaker.

3. The power system protection system according to claim 2, wherein
the controller is adapted to determine whether the accident has been eliminated based on a result of an accident elimination verification operation, wherein
in the accident elimination verification operation, the commutator is turned on when the accident is detected upon turning off of the commutator after a predetermined time period has elapsed since turning on of the commutator.

4. The power system protection system according to claim 3, wherein
when the accident is not eliminated even after the controller repeats the accident elimination verification operation a predetermined number of times, the controller is adapted to turn off the system circuit breaker.

5. The power system protection system according to claim 3 or 4, wherein
the controller is adapted to extend a time period in which the commutator is being turned on in the accident elimination verification operation each time the controller repeats the accident elimination verification operation.

6. The power system protection system according to any one of claims 3 to 5, wherein
the commutator comprises:
a mechanical switch; and
a semiconductor switch connected in series with the mechanical switch, the mechanical switch being disposed nearer to the power transmission line, the semiconductor switch being disposed nearer to the ground, and
when turning on the commutator the controller is adapted to turn on the mechanical switch first and then turn off the semiconductor switch, and
when turning off the commutator the controller is adapted to turn off the semiconductor switch first and then turn off the mechanical switch.

7. The power system protection system according to claim 6, wherein
the semiconductor switch comprises a plurality of semiconductor devices connected in parallel or in series with each other.

8. The power system protection system according to any one of claims 1 to 7, wherein
the power transmission line comprises a plurality of branch lines, and
the system circuit breaker and the commutator are installed on each of the plurality of branch lines.

9. A power system protector to be installed in a section between a system circuit breaker and a load, of a power transmission line, the power transmission line connecting a power generator and the load, the load being to be supplied with power from the power generator, the power system protector comprising:
a commutator connected to the section between the system circuit breaker and the load, of the power transmission line, and connected to a ground, the commutator is adapted to isolate the power transmission line from the ground when in an "off" state, and adapted to cause the power transmission line to conduct to the ground when in an "on" state, wherein
upon detection of an accident caused by a ground fault or short circuit occurred on the power transmission line, the power system protector is adapted to turn on the commutator to redirect a current flowing through the power transmission line to the ground.

10. The power system protector according to claim 9 comprising a controller adapted to control on-off switching of the commutator.

11. The power system protector according to claim 10, wherein
the controller is adapted to determine whether the accident has been eliminated based on a result of an accident elimination verification operation, wherein
in the accident elimination verification operation, the commutator is turned on when the accident is detected upon turning off of the commutator after a predetermined time period has elapsed since turning on of the commutator.

12. The power system protector according to claim 11, wherein
the controller is adapted to extend a time period in which the commutator is being turned on in the accident elimination verification operation each time the controller repeats the accident elimination verification operation.

13. The power system protector according to any one of claims 10 to 12, wherein
the commutator comprises:
a mechanical switch; and
a semiconductor switch connected in series with the mechanical switch, the mechanical switch being disposed nearer to the power transmission line, the semiconductor switch being disposed nearer to the ground, and
when turning on the commutator, the controller is adapted to turn on the mechanical switch first and then turn off the semiconductor switch, and
when turning off the commutator, the controller is adapted to turn off the semiconductor switch and then turn off the mechanical switch.

14. The power system protector according to claim 13, wherein
the semiconductor switch comprises a plurality of semiconductor devices connected in parallel or in series with each other.

15. A power system protection method for use in a power system protection system comprising:
a system circuit breaker being installed on a power transmission line, the power transmission line connecting a power generator and a load, the load being to be supplied with power from the power generator; and
a commutator being connected to a section between the system circuit breaker and the load, of the power transmission line, and connected to a ground, the commutator being to isolate the power transmission line from the ground when in an "off" state, and to cause the power transmission line to conduct to the ground when in an "on" state, the power system protection method comprising:
a step of determining whether an accident caused by a ground fault or short circuit has occurred on the power transmission line; and
a step of redirecting a current flowing through the power transmission line to the ground by turning on the commutator, upon determination that the accident has occurred.

16. The power system protection method according to claim 15 comprising
a step of determining whether the accident has been eliminated based on a result of an accident elimination verification operation of turning on the commutator when the accident is detected upon turning off of the commutator after a predetermined time period has elapsed since turning on of the commutator.

17. The power system protection method according to claim 16, wherein
the system circuit breaker is turned off when the accident is not eliminated even after the accident elimination verification operation is repeated a predetermined number of times.

18. The power system protection method according to claim 16 or 17, wherein
a time period in which the commutator is being turned on in the accident elimination verification operation is extended each time the accident elimination verification operation is repeated.

19. The power system protection method according to any one of claims 16 to 18, wherein
the commutator comprises:
a mechanical switch; and
a semiconductor switch connected in series with the mechanical switch, the mechanical switch being disposed nearer to the power transmission line, the semiconductor switch being disposed nearer to the ground, and
when the commutator is to be turned on, the mechanical switch is first turned on and the semiconductor switch is then turned off, and
when the commutator is to be turned off, the semiconductor switch is first turned off, and the mechanical switch is then turned off.
